# EUROPEAN PATENT SPECIFICATION

(11) **EP 4 595 479 B1**
(45) Date of publication and mention of the grant of the patent: **08.07.2026**
(21) Application number: 22854306.2
(22) Date of filing: 23.12.2022
(51) Int. Cl.: H04W 4/60, H04L 69/28, H04W 8/18, H04W 60/04

(54) **FAST SUBSCRIBER IDENTITY MODULE (SIM) DEVICE ACTIVATION USING STATUS QUERIES**
SCHNELLE AKTIVIERUNG EINER TEILNEHMERIDENTITÄTSMODULVORRICHTUNG (SIM) UNTER VERWENDUNG VON STATUSANFRAGEN
ACTIVATION RAPIDE DE DISPOSITIF DE MODULE D'IDENTITÉ D'ABONNÉ (SIM) À L'AIDE DE DEMANDES D'ÉTAT

(43) Date of publication of application: 06.08.2025
(73) Proprietor: Google LLC, Mountain View, CA 94043 (US)
(72) Inventor: CHEN, Edison, Taipei (TW)
(74) Representative: Trichard, Louis
(86) International application number: PCT/US2022/053962
(87) International publication number: WO 2024/136879

(56) References cited:
- EP-A2- 2 500 825
- US-A1- 2015 072 736
- "3rd Generation Partnership Project; Technical Specification Group Core Network and Terminals; C-language binding to (U)SIM API (Release 16)", 10 July 2020 (2020-07-10), XP052298892, Retrieved from the Internet <URL:https://ftp.3gpp.org/3guInternal/3GPP_ultimate_versions_to_be_transposed/sentToDpc/31131-g00.zip 31131-g00.doc> [retrieved on 20200710]
- "Digital cellular telecommunications system (Phase 2+); Specification of the SIM Application Toolkit for the Subscriber Identity Module - Mobile Equipment (SIM - ME) interface Release 1999;1114-830", ETSI DRAFT; 1114-830, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. zArchive, no. V8.3.0, 21 July 2000 (2000-07-21), pages 1 - 135, XP014116659

## Description

### BACKGROUND

Upon powering on, user equipment (UE) (e.g., smartphones, wearables devices, personal computers) is configured to attach to a cellular network within range. To establish a data connection between the user equipment and the attached cellular network, the user equipment includes a modem to transmit data to and receive data from the cellular network and a subscriber identity module (SIM) device that stores identification and subscriber information associated with the user equipment. In establishing a data connection with the attached cellular network, the modem of the user equipment sends one or more envelope commands to the SIM device that identify a proactive command to be prepared by the SIM device. Such proactive commands instruct the user equipment to perform one or more actions to establish the data connection between the user equipment and the cellular network such as transmitting updated location information to the cellular network or requesting a data connection from the cellular network. After sending the envelope command, the modem waits for a timer to expire before requesting the status of the proactive command and subsequently fetching the proactive command from the SIM device. EP 2 500 825 A2 describes an IC card, which interprets and executes a command instruction from an external device, and returns the execution result as a response, includes a command generation unit configured to generate a request command which requests the external device to execute a specific operation in response to a specific command instruction from the external device, a storage unit configured to store the generated request command in a memory, a notification unit configured to notify the external device of generation of the request command when a response to the specific command instruction is sent, and notify the external device of the request command when the external device instructs to fetch the request command, and a discard unit configured to discard the request command in the memory when the external device instructs to discard the request command. US 2015/072736 A1 describes Aspects of the present disclosure are directed to a polling interval negotiation scheme between a universal integrated circuit card (UICC) and a wireless terminal. A wireless terminal and a UICC are communicating at a first polling interval. The wireless terminal may send a proposed polling interval to the UICC. The wireless terminal determines a response of the UICC to the proposed polling interval, and communicates with the UICC at a second polling interval based on the response of the UICC. "3rd Generation Partnership Project; Technical Specification Group Core Network and Terminals; C-language binding to (U)SIM API (Release 16)", 3GPP DRAFT; 31131-G00, 3GPP, MOBILE COMPETENCE CENTRE; 650, ROUTE DES LUCIOLES; F-06921 SOPHIA-ANTIPOLIS CEDEX; FRANCE, 10 July 2020 describes 'C'-language binding for (U)SIM API and proactive command handling. "Digital cellular telecommunications system (Phase 2+); Specification of the SIM Application Toolkit for the Subscriber Identity Module - Mobile Equipment (SIM - ME) interface Release 1999;1114-830", ETSI DRAFT; 1114-830, ETSI, 650, ROUTE DES LUCIOLES; F-06921 SOPHIA-ANTIPOLIS; FRANCE, vol. zArchive, no. V8.3.0, 21 July 2000, pages 1-135 describes a SIM Application Toolkit providing mechanisms which allow applications, existing in the SIM, such as Proactive SIM, which is a mechanism whereby the SIM can initiate actions to be take by the mobile equipment. However, waiting for the time to expire before requesting the status of the proactive command and subsequently fetching the proactive command from the SIM device adds time to the process of establishing a data connection between the user equipment and the cellular network. For example, even when the proactive command is ready at the SIM device, the modem waits for the timer to expire before requesting the status of the proactive command and subsequently fetching the proactive command. As such, the time to retrieve the proactive command is increased, also increasing the time to establish the data connection between the user equipment and the cellular network and negatively impacting user experience.

### SUMMARY

According to a first aspect, there is provided a method as set forth in claim 1. According to a second aspect, there is provided a system as set forth in claim 13. According to a third aspect, there is provided a user equipment as set forth in claim 14. According to a fifth aspect, there is provided a computer program as set forth in claim 15. Any embodiment, aspect, example or implementation not being part of the claims, is only presented as information.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram of a cellular networking framework configured for fast subscriber identity module (SIM) device activation using early status queries, in accordance with some embodiments.
FIGs. 2 and 3 together show a signal flow diagram of an example process for receiving a proactive command from a SIM device and establishing a data connection between user equipment and a cellular network, in accordance with some embodiments.
FIG. 4 is a signal flow diagram of an example process for fast SIM device activation using early status queries to reduce the time to establish a data connection between user equipment and a cellular network, in accordance with some embodiments.
FIG. 5 is a block diagram of a cellular networking framework configured for fast SIM device activation using a waiting time database, in accordance with some embodiments.
FIG. 6 is a timing diagram for an example process 600 for fast SIM device activation using early status queries, in accordance with some embodiments.
FIG. 7 is an example method of fast SIM device activation and early status queries using a waiting time database, in accordance with some embodiments.
FIG. 8 is an example method of fast SIM device activation using early status queries, in accordance with some embodiments.

### SUMMARY OF EMBODIMENTS

Techniques and systems described herein are directed to reducing the time for fetching a proactive command from a subscriber identity module (SIM) device through fast SIM device activation using early status queries. According to an example embodiment, a method can include, in response to a user equipment (UE) attaching to a cellular network, sending an envelope command indicating a proactive command to a SIM device of the UE. Further, the method can include starting a status timer and sending a status query to the SIM device while the status timer is running. Additionally, the method can include, in response to receiving a status from the SIM device indicating the proactive command is ready, fetching the proactive command from the SIM device.

Further, the method can include establishing a data connection between the UE and the cellular network based on the proactive command. Also, the method may include, in response to sending the envelope command indicating the proactive command to the SIM device, retrieving a carrier waiting time associated with the proactive command from a database. Additionally, the method can include updating the status timer based on the carrier waiting time associated with the proactive command. The method can further include, in response to receiving the status from the SIM device indicating the proactive command is ready, updating the carrier waiting time based on an amount of elapsed time indicated by the status timer.

Also, the method may include, in response to the status timer expiring, starting a polling timer and sending a second status query to the SIM device while the polling timer is running. Additionally, the method can include, in response to receiving the status from the SIM device indicating the proactive command is ready, updating a carrier waiting time associated with the proactive command stored in a database based on an amount of elapsed time indicated by the polling timer. Further the method can include periodically sending the status query to the SIM device while the status timer is running.

In another example embodiment, a method can include, in response to a UE attaching to a cellular network, sending an envelope command indicating a proactive command to a subscriber identity module (SIM) device of the UE and periodically sending a status query to the SIM device. Further, the method can include, in response to receiving a status from the SIM device indicating the proactive command is ready, fetching the proactive command from the SIM device.

Additionally, the method can include, in response to sending the envelope command indicating the proactive command to the SIM device, retrieving a carrier waiting time associated with the proactive command from a database. Further, the method may include updating a status timer based on the carrier waiting time and starting the status timer. The status query may be periodically sent while the status timer is running. The method can also include in response to receiving the status from the SIM device indicating the proactive command is ready, updating a carrier waiting time in a database based on an amount of elapsed time indicated by the status timer.

The method can additionally include in response to a status timer expiring, starting a polling timer. Further, the status query may be periodically sent during the polling timer. Also, the method can include in response to receiving the status from the SIM device indicating the proactive command is ready, updating a carrier waiting time in a database based on an amount of elapsed time indicated by the polling timer. Additionally, the method may include establishing a Bearer Independent Protocol connection between the UE and the cellular network based on the proactive command. Generally, the UE can include a smartphone.

In example embodiments, an apparatus includes a UE that can have one or more processors and a memory coupled to the one or more processors and storing executable instructions configured to manipulate the one or more processors to perform one or more of the methods disclosed herein.

As well, in example embodiments, a UE includes a SIM device and a modem that includes a connection engine configured to perform one or more of the methods disclosed herein.

### DETAILED DESCRIPTION

In response to a user equipment (UE) (e.g., compute-enabled phone, tablet computer, personal computer, laptop computer, compute-enabled wearable device, Internet of Things (IoT) device, router, mobile hotspot device, automotive device, manufacturing device) being powered on, the UE is configured to attach (e.g., communicatively couple) to a cellular network. To this end, the UE includes a modem configured to transmit and receive data from the cellular network and a subscriber identity module (SIM) device that stores identification and subscriber information associated with the user equipment. After being powered on, the user equipment searches for and communicatively couples to the cellular network (e.g., searches for and camps on a cell of the cellular network). The modem of the user equipment then sends the identification information and subscriber information to the cellular network which, in turn, authenticates the user equipment based on the identification information and subscriber information. Once the user equipment is authenticated on the cellular network, the user equipment is attached to the cellular network and is able to request a data connection (e.g., channel) be opened between the user equipment and the cellular network. However, in some embodiments, before requesting the data connection be opened, the user equipment updates one or more parameters associated with the user equipment stored in the cellular network (e.g., in a management server, subscriber server, or both). For example, when one or more parameters associated with the user equipment have changed since a previous connection (e.g., attachment) to the cellular network, the user equipment updates these parameters stored in the cellular network before requesting a data connection be opened between the user equipment and the cellular network. Such parameters, for example, include the location of the user equipment, the radio access technology used by the user equipment to communicatively couple to the cellular network, identification information of the user equipment, or any combination thereof.

To update such parameters and request the data connection be opened between the user equipment and the cellular network, the modem of the user equipment sends one or more envelope commands to the SIM device of the user equipment. Such envelope commands, for example, include data indicating one or more proactive commands to be prepared by the SIM device. These proactive commands include, for example, data instructing the user equipment to perform one or more actions such as display text, begin one or more operations, transit parameters to the cellular network, establish a data connection between the user equipment and the cellular network, or any combination thereof. After sending the envelope commands, the modem of the user equipment then waits for a status timer to expire and sends a status query (e.g., data requesting whether preparation of the proactive command is complete, the proactive command is ready to be sent, or both) to the SIM device. In response to the status query, the SIM device indicates to the modem whether the proactive command is ready to be sent to the modem. If the SIM device indicates that the proactive command is ready, then the modem fetches the proactive command from the SIM device and user equipment performs one or more actions identified in the proactive command. For example, the user equipment sends one or more updated parameters to the cellular network, requests a data connection be established between the user equipment and the cellular network, or both.

However, the modem of the user equipment first waiting for the status timer to expire before sending the status request to the SIM device adds unnecessary time in fetching the proactive command from the SIM device and subsequently establishing a data connection between the user equipment and the cellular network. For example, when the status timer has an amount of time longer than the time necessary for the SIM device to prepare a proactive command, the modem and SIM device of the user equipment sit idle while the status timer expires. The modem and SIM device of the user equipment sitting idle while the status timer expires increases the time needed in fetching the proactive command and establishing a data connection between the user equipment and the cellular network, negatively impacting user experience. To this end, systems and techniques disclosed herein are directed to reducing the time for fetching a proactive command from the SIM device through fast SIM device activation using early status queries. For example, in some embodiments, after sending an envelope command indicating a proactive command to the SIM device, the modem of the user equipment is configured to periodically send a status query to the SIM device without waiting for the status timer to expire. As an example, after sending the envelope command, the modem sends a status query every second to the SIM device. In this way, the SIM device is able to report that the proactive command is ready to be sent before a status timer would expire, helping reduce the time for fetching the proactive command from the SIM device and subsequently establishing a data connection between the user equipment and cellular network.

In other embodiments, after sending an envelope command indicating a proactive command to the SIM device, the modem retrieves a carrier waiting time from a waiting time database. Such a carrier waiting time, for example, includes data indicating an amount of time associated with a proactive command (e.g., an amount of time necessary for the SIM device to prepare the proactive command). The user equipment then updates the status timer based on the retrieved carrier waiting time. For example, the user equipment updates the status timer to have the amount of time indicated in the carrier waiting time. Further, the user equipment (e.g., via the modem) is configured to send one or more results to the waiting time database to update the carrier waiting times. For example, in response to receiving a ready status (e.g., data indicating a proactive command is ready to be sent from the SIM device) from the SIM device, the modem sends results to the waiting time database. These results include data indicating the proactive command ready to be sent by the SIM device, an amount of time elapsed since the envelope command indicating the proactive command was sent to the SIM device, or both. Based on such results, the waiting time database then updates one or more carrier waiting times. For example, the waiting time database updates one or more carrier times associated with a proactive command to include an amount of time equal to an amount of time indicated in a result associated with the proactive command. In this way, the user equipment helps update the amount of time of the status timer to more accurately represent the amount of time necessary for the SIM device to prepare a proactive command. As such, the time for fetching the proactive command from the SIM device and subsequently establishing a data connection between the user equipment and cellular network is reduced, improving user experience.

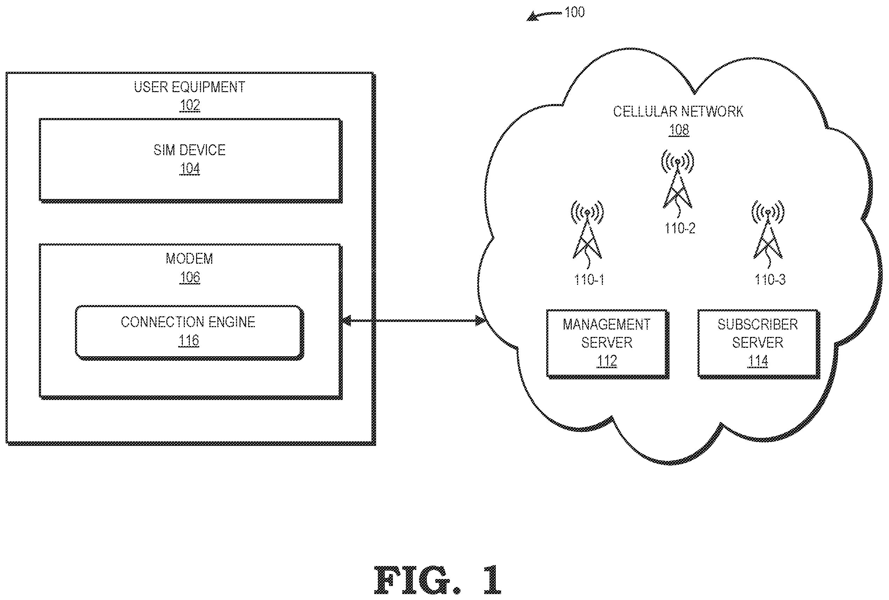

FIG. 1 presents a cellular networking framework 100 configured for fast SIM device activation using early status queries. To this end, cellular networking framework 100 includes cellular network 108 associated with one or more cellular carriers (e.g., cellular providers). Cellular network 108 is configured to transmit and receive one or more network messages to and from user equipment 102 and includes, for example, a Global System for Mobile Communication (GSM) cellular network, a Universal Mobile Telecommunications System (UMTS) cellular network, a Long-Term Evolution (LTE) cellular network, a 5G New Radio (NR) cellular network, 5G Technical Forum (5GTF), a 5G Special Interest Group cellular network (5G-SIG), or any combination thereof. Network messages transmitted and received by cellular network 108 include, for example, telephone calls, Voice over Internet Protocol (VoIP) calls, Short Message Service (SMS) messages, Multimedia Messaging Service (MMS) messages, authentication messages, registrations messages, update messages, attach messages, service request messages, or any combination thereof, to name a few. To facilitate the transmission and reception of network messages between cellular network 108 and user equipment 102, cellular network 108 includes one or more cells 110 configured to receive and transmit network messages to and from user equipment 102. Each cell 110 includes, for example, mobile base station towers (e.g., "cell towers"), antennae, transmitters, receivers, digital signal processors, control electronics, Global Positioning System (GPS) receivers, base transceiver stations, or any combination thereof, configured to receive and transmit network messages to and from user equipment 102. Though the example embodiment illustrated in FIG. 1 presents the cellular network 108 having three cells 110-1, 110-2, and 110-3, in other embodiments, cellular network 108 may include any number of cells 110 to facilitate the reception and transmission of network messages to and from user equipment 102.

User equipment 102 is configured to transmit and receive network messages from cellular network 108 and includes, for example, compute-enabled phone ("smartphone"), tablet computer, personal computer, laptop computer, compute-enabled wearable device (e.g., smartwatch, fitness tracker, smart bracelet), Internet of Things (IoT) device, router, mobile hotspot device, an automotive device, a manufacturing device, or any combination thereof, to name a few. To transmit and receive network messages from cellular network 108, user equipment 102 includes or is otherwise connected to SIM device 104 and modem 106. Modem 106 includes hardware-based circuitry, software-based circuitry, or both configured to transmit or receive network messages using one or more radio access technologies. Such radio access technologies include a connection method or protocol used to communicatively couple user equipment 102 to one or more cellular networks 108, for example, 2G network connections (e.g., Global System for Mobile Communications (GSM) protocols, code division multiple access (CDMA) protocols, general packet radio service (GPRS) protocols, enhanced data rates for GSM evolution (EDGE) protocols), 3G network connections (e.g., Universal Mobile Telecommunications System (UMTS) protocols, wideband code division multiple access (W-CDMA) protocols, CDMA-200 protocols, high speed packet access (HSPA) protocols), 4G network communications (e.g., Long Term Evolution (LTE) protocols, Worldwide Interoperability for Microwave Access (WiMAX) protocols), 5G network communications (e.g., 5G New Radio (NR) protocols, 5G Technical Forum (5GTF) protocols, 5G Special Interest Group (5G-SIG) protocols), or any combination thereof. For example, modem 106 is configured to transmit and receive network messages from cellular network 108 using 4G network communications. Additionally, modem 106 includes or is otherwise connected to connection engine 116 that includes hardware-based circuitry, software-based circuitry, or both configured to generate one or more network messages, handle one or more received network messages (e.g., queue one or more received network messages, provide one or more network messages to other circuitry of user equipment 102), handle one or more network messages for transmission (e.g., queue one or more network messages for transmission), or both. As an example, connection engine 116 is configured to generate, handle, or both one or more network messages for transmission to cellular network 108.

SIM device 104 includes, for example, a SIM card (e.g., full-size card, mini card, micro card, nano card), universal subscriber identity module (USIM), embedded SIM (eSIM), integrated SIM (iSIM), or any combination thereof. According to embodiments, SIM device 104 is configured to store device identification data, store user identification data, generate proactive commands, or any combination thereof for user equipment 102. Such proactive commands include, for example, data instructing user equipment 102, modem 106, connection engine 116, or any combination thereof to perform one or more actions (e.g., display text, begin one or more operations, transit data to cellular network 108, establish a data connection with cellular network 108, begin a Bearer Independent Protocol (BIP) connection). The device identification data and user identification data for user equipment 102 stored by SIM device 104 include, for example, SIM device identification data (e.g., Integrated Circuit Card Identification (ICCID) values, authentication keys (e.g., Kᵢ)), subscriber data (e.g., international mobile subscriber identity (IMSI), local area identity data,), or both associated with user equipment 102.

In embodiments, to transmit and receive network messages from cellular network 108, user equipment 102 is configured to first communicatively couple to (e.g., camp on) one or more cells 110 of cellular network 108. For example, in response to user equipment 102 powering on, user equipment 102 is configured to communicatively couple to (e.g., camp on) one or more cells 110 of a cellular network 108 associated with a cellular carrier (e.g., cellular provider). According to embodiments, in response to user equipment 102 being communicatively coupled to one or more cells 110 of a cellular network 108 associated with a cellular carrier, cellular network 108 is configured to authenticate and register user equipment 102. To this end, cellular network 108 includes one or more management servers 112 each including one or more physical servers, virtual servers, or both configured to authenticate user equipment 102. In embodiments, each cellular carrier (e.g., cellular provider) associated with cellular network 108 maintains a respective management server 112 for cellular network 108. That is to say, cellular network 108 includes a respective management server 112 for each cellular carrier associated with cellular network 108.

In embodiments, a respective management server 112 for a cellular carrier authenticates user equipment 102 by, for example, comparing identification data (e.g., user identification data, device identification data) associated with the user device 102 to data stored in a subscriber server 114 also associated with the cellular carrier that includes one or more physical servers, virtual servers, or both configured to store authentication information (e.g., a list of authenticated devices, a list authenticated users, identification data of authenticated devices, authentication information of authenticated users), user profiles (user identification data, user location information, user service information), or both associated with cellular network 108, the cellular provider, or both. For example, to authenticate user equipment 102, a respective management server 112 for a cellular carrier receives device identification data and user identification data associated with user equipment 102 (e.g., as stored in SIM device 104 of user equipment 102) and compares the received device identification data and user identification data to device identification data and user identification data stored in subscriber server 114 of the cellular carrier. In response to the comparison indicating that the user device 102 is authenticated (e.g., the received device identification data, user identification data, or both match at least a portion of the device identification data, user identification data, or both stored in a subscriber server 114), the management server 112 authenticates user equipment 102 such user equipment 102 is attached to cellular network 108 (e.g., is authenticated on the network and is able to request a data connection). In embodiments, to authenticate user equipment 102, a management server 112 of a cellular carrier is further configured to, for example, store device identification data, user identification data, or both associated with user equipment 102 in a subscriber server 114 of the cellular carrier, generate registration data for the authenticated user equipment 102, determine services for the authenticated user equipment 102, or any combination thereof. For example, in response to a comparison indicating that user equipment 102 is authenticated, a management server 112 of a cellular carrier is configured to determine one or more services for the authenticated user equipment 102 based on user location information and user service information stored in subscriber server 114.

In embodiments, after cellular network 108 authenticates user equipment 102 and user equipment 102 is communicatively coupled (e.g., attached) to cellular network 108, user equipment 102 is configured to update one or more parameters stored in management server 112, subscriber server 114, or both. Such parameters, for example, include the location of user equipment 102, the radio access technology (e.g., 2G, 3G, 4G, 5G communications) used by user equipment 102 to communicatively couple to cellular network 108, identification information (e.g., IMSI, mobile subscriber integrated services digital network number (MSISDN)) associated with user equipment 102, or any combination thereof. For example, in response to one or more parameters changing since one or more previous connections (e.g., attachments) of user equipment 102 to cellular network 108, user equipment 102 is configured to update one or more parameters stored in management server 112, subscriber server 114, or both. As an example, in response to the location of user equipment 102 changing since the most recent connection (e.g., attachment) of user equipment 102 to cellular network 108, user equipment 102 is configured to update location information for user equipment 102 in management server 112, subscriber server 114, or both. To this end, connection engine 116 is configured to generate, provide, or both one or more envelope commands to SIM device 104. These envelope commands, for example, include data instructing SIM device 104 to prepare one or more proactive commands (e.g., display text, begin one or more operations, transit data to cellular network 108, begin a BIP connection) based on the received envelope commands. As an example, connection engine 116 is configured to generate, provide, or both an envelope command including data instructing SIM device 104 to prepare a proactive command for updating one or more parameters associated with user equipment 102 in management server 112, subscriber server 114, or both. That is to say, instructing SIM device 104 to prepare a proactive command including data instructing modem 106 to transmit data indicating one or more current parameters of user equipment 102 to cellular network 108.

After sending one or more envelope commands to SIM device 104, connection engine 116 is configured to wait until SIM device 104 is ready to send the proactive command. To this end, connection engine 116 is configured to send one or more status queries to SIM device 104. Such status queries, for example, include data instructing SIM device 104 to report whether a proactive command is ready to be sent from SIM device 104 to connection engine 116, modem 106, or both. For example, in some embodiments, after sending an envelope command to SIM device 104, connection engine 116 is configured to wait for a predetermined amount of time before sending a status query to SIM device 104. After receiving a status query, SIM device 104 sends a ready status (e.g., data indicating the proactive command is ready) to connection engine 116, modem 106, or both if the proactive command is ready to be sent. That is to say, in response to receiving a status query and in response to a proactive command being ready to be sent, SIM device 104 sends a ready status to connection engine 116, modem 106, or both. Upon receiving the ready status, connection engine 116 then sends data (e.g., a fetch command) requesting the proactive command from SIM device 104 which then sends the proactive command to connection engine 116, modem 106, or both. After receiving the proactive command, user equipment 102 then performs one or more actions indicated by the proactive command. For example, in response to receiving, for example, a proactive command to open a channel, connection engine 116 initiates a BIP connection between user equipment 102 and cellular network 108 such that a data connection between user equipment 102 and cellular network 108 is established. However, connection engine 116 first waiting a predetermined period of time before sending a status query to SIM device 104 adds additional time to the process of receiving a proactive command. For example, when SIM device 104 finishes preparing a proactive command during the predetermined amount of time, connection engine 116, modem 106, and SIM device 104 are all idle while the remainder of the predetermined amount of time expires, adding unnecessary time to the process of retrieving a proactive command, establishing a connection (e.g., BIP connection) between user equipment 102 and cellular network 108, or both, which negatively impacts user experience.

To this end, connection engine 116 is configured to reduce the amount of time between sending an envelope command and sending a status query to SIM device 104. For example, in some embodiments, connection engine 116 is configured to periodically send status queries after sending an envelope command to SIM device 104 rather than waiting a predetermined amount of time before sending a status query. Additionally, according to some embodiments, cellular networking framework 100 includes a database (not pictured for clarity) that stores waiting times associated with one or more proactive commands and one or more cellular carriers. For example, the database includes respective waiting times for one or more types of proactive commands (e.g., display text, begin one or more operations, transit data to cellular network 108, begin a BIP connection) with each respective waiting time indicating an amount of time necessary for making a proactive command ready to be sent to connection engine 116, modem 106, or both. After sending an envelope command to SIM device 104 associated with a proactive command, connection engine 116 is configured to wait an amount of time indicated by the waiting time associated with the proactive command stored in the database before sending a status query. Additionally, connection engine 116 is configured to send timing data (e.g., data representing the amount of time elapsed between sending an envelope command to SIM device 104 and receiving a ready status from SIM device 104) associated with one or more proactive commands to the database. The database then uses such data to update the waiting times stored in the database. In this way, the amount of time between sending an envelope command and sending a status query to SIM device 104 more accurately reflects the time necessary to prepare the proactive command, reducing the amount of time needed to receive a proactive command from SIM device 104, establishing a connection between user equipment 102 and cellular network 108, or both, which improves user experience.

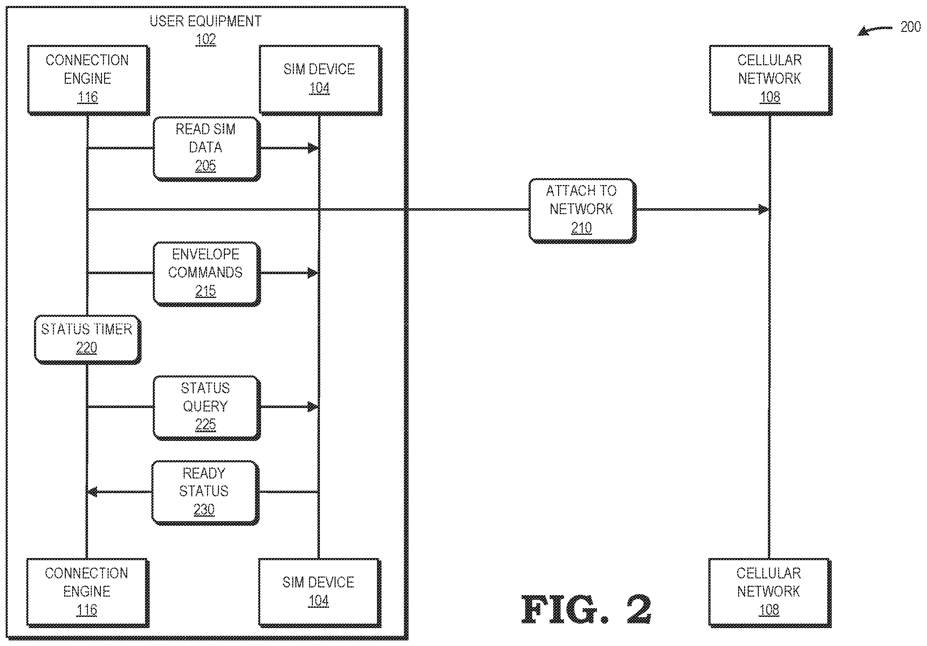

Referring now to FIG. 2, a signal flow diagram of an example process 200 for receiving a proactive command from SIM device 104 and establishing a data connection between user equipment 102 and cellular network 108 is presented. In embodiments, process 200 first includes connection engine 116 sending a read SIM data command 205 to SIM device 104, for example, in response to user equipment 102 powering on. Read SIM data command 205 includes, for example, data requesting at least a portion of the device identification data (e.g., ICCID values, authentication keys (e.g., Kᵢ)), subscriber data (e.g., IMSI, local area identity data,), or both stored in SIM device 104. After receiving the data requested in read SIM data command 205 from SIM device 104, connection engine 116 sends an attach to network request 210 to cellular network 108. The attach to network request 210, for example, includes data requesting cellular network 108 authenticate user equipment 102, at least a portion of the identification data read from SIM device 104, at least a portion of the subscriber data read from SIM device 104, or any combination thereof. Upon receiving the attach to network request 210 from connection engine 116, cellular network 108 authenticates user equipment 102 based on the identification information, subscriber information, or both indicated in the attach to network request 210 such that user equipment 102 is attached (e.g., communicatively coupled) to cellular network 108.

After sending the attach to network request 210 to cellular network 108, connection engine 116 then sends one or more envelope commands 215 to SIM device 104. These envelope commands 215, for example, include data instructing SIM device 104 to prepare one or more proactive commands (e.g., display text, begin one or more operations, transmit data to cellular network 108, begin BIP connection) based on the received envelope commands. For example, connection engine 116 sends a first envelope command 215 including data instructing SIM device 104 to prepare a proactive command to transmit location data of user equipment 102 to cellular network 108 and a second envelope command 215 including data instructing SIM device 104 to prepare a proactive command to begin a BIP connection between user equipment 102 and cellular network 108. Once the envelope commands 215 are sent to SIM device 104, connection engine 116 then waits until status timer 220 expires. Status time 220 includes, for example, a timer having a predetermined amount of time representing the time connection engine 116 must wait before connection engine 116 sends a status query 225 to SIM device 104. In other words, connection engine 116 waits a predetermined amount of time indicated by status timer 220 before sending a status query to SIM device 104. Such status queries, for example, include data instructing SIM device 104 to report whether a proactive command is ready to be sent from SIM device 104 to connection engine 116, modem 106, or both. In response to receiving status query 225, SIM device 104 sends ready status 230 to connection engine 116 which includes data indicating that one or more proactive commands are ready to be sent to connection engine 116, modem 106, or both.

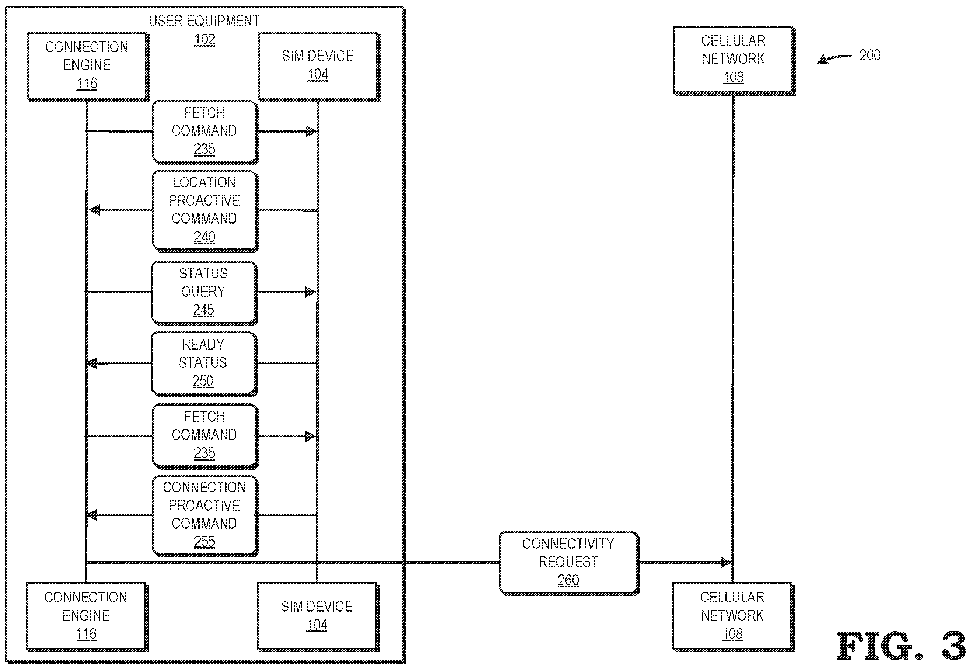

Referring now to FIG. 3, example operation 200 further includes connection engine 116, in response to receiving ready status 230 from SIM device 104, sending fetch command 235 to SIM device 104. Fetch command 235 includes data requesting one or more ready proactive commands from SIM device 104. For example, fetch command 235 includes data requesting the proactive command indicated to be ready by ready status 230. SIM device 104 then sends one or more proactive commands to connection engine 116 in response to receiving fetch command 235. For example, SIM device 104 sends location proactive command 240 to connection engine 116. Location proactive command 240, for example, includes data indicating that the location data of user equipment 102 is to be sent to cellular network 108. In response to receiving location proactive command 240, connection engine 116, modem 106, or both, are configured to send such location information to cellular network 108.

Connection engine 116 then sends a second status query 245 to determine if one or more other proactive commands are ready to be sent to connection engine 116, modem 106, or both. Upon receiving the second status query 245, SIM device 104 is configured to send a second ready status 250 that includes data indicating another proactive command is ready to be sent. Connection engine 116 then sends a second fetch command 235 to SIM device 104 and, in response to the second fetch command 235, SIM device 104 sends another proactive command to connection engine 116, modem 106, or both. For example, SIM device 104 sends connection proactive command 255 to connection engine 116, modem 106, or both. Connection proactive command 255 includes data indicating that connection engine 116, modem 106, or both are to initiate a data connection (e.g., BIP connection) between user equipment 102 and cellular network 108. In response to receiving connection proactive command 255, connection engine 116, modem 106, or both send connectivity request 260 to cellular network 108. Connectivity request 260, for example, includes data requesting the initiation of a data connection (e.g., BIP connection) between user equipment 102 and cellular network 108 and data necessary for, aiding in, or helpful for establishing such a data connection (e.g., BIP connection) between user equipment 102 and cellular network 108. In this way, one or more proactive commands are received from SIM device 104 and a data connection between user equipment 102 and cellular network 108 is established. However, first waiting for status timer 220 to expire before connection engine 116 sends the first status query 225 to SIM device 104 adds additional time to the example process 200 and increases the time needed to establish a data connection between user equipment 102 and cellular network 108 which negatively impacts user experience.

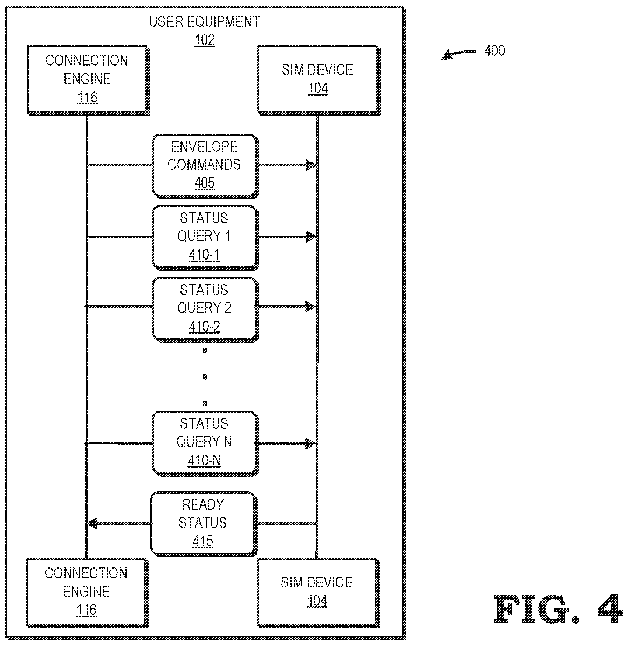

To this end, FIG. 4 presents an example process 400 for fast SIM device activation using early status queries to reduce the time needed (e.g., in process 200) to establish a data connection between user equipment 102 and cellular network 108. Example process 400 first includes connection engine 116 sending one or more envelope commands 405, similar to or the same as envelope commands 215, to SIM device 104. These envelope commands 405, for example, include data instructing SIM device 104 to prepare one or more proactive commands (e.g., display text, begin one or more operations, transit data to cellular network 108, begin BIP connection) based on the received envelope commands. After sending the envelope commands 405, connection engine 116 then begins to periodically send status queries 410, similar to or the same as status queries 225, 245. That is to say, for example, without waiting a predetermined amount of time, waiting for status timer 220 to expire, or both, connection engine 116 then begins to periodically send status queries 410. Connection engine 116 periodically sends status queries 410, for example, by sending respective status queries 410 at predetermined intervals of time (e.g., seconds, minutes, hours). In embodiments the predetermined intervals of time between two or more status queries 410 is equal, the predetermined intervals of time between two or more status queries 410 is different, or both. Though the example embodiment illustrated in FIG. 4 presents connection engine 116 sending three status queries (410-1, 410-2, 410-N) representing an N number of status queries, in other embodiments, connection engine 116 may send any number of status queries 410 to SIM device 104.

According to embodiments, connection engine 116 is configured to periodically send status queries 410 until ready status 415, similar to or the same as ready statuses 230, 250, is received from SIM device 104, a predetermined amount of time (e.g., polling time) has expired, or both. In response to a status query 410, SIM device 104 sends ready status 415 to connection engine 116 indicating one or more proactive commands are ready to be sent to connection engine 116, modem 106, or both. Because connection engine 116 does not wait for status timer 220 to expire, wait a predetermined amount of time, or both, before sending status queries 410 to SIM device 104, the amount of time in the example process 400 that connection engine 116, modem 106, and SIM device 104 are all idle is reduced. As such, the time to retrieve a proactive command, to establish a connection (e.g., BIP connection) between user equipment 102 and cellular network 108, or both is reduced, improving user experience.

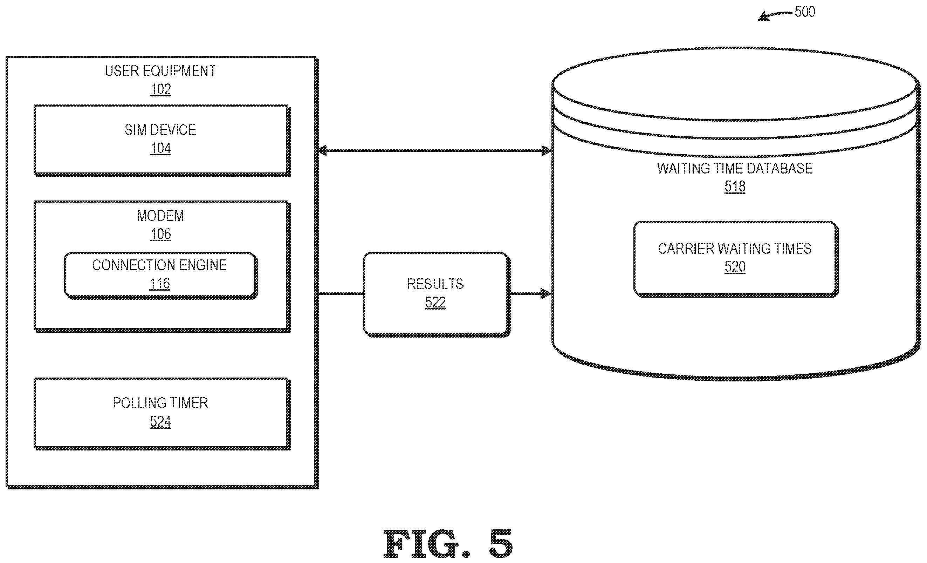

Additionally, or alternatively, to help reduce the time needed to retrieve a proactive command from SIM device 104 and establish a connection between user equipment 102 and cellular network 108, a cellular networking framework 500, similar to or the same as cellular networking framework 100, includes user equipment 102 communicatively coupled to waiting time database 518. To this end, FIG. 5 presents a block diagram of cellular networking framework 500 configured for fast SIM device activation using waiting time database 518. Waiting time database 518, for example, includes one or more servers (e.g., virtual servers, physical servers), one or more memory storages (e.g., solid-state drives (SSDs), hard drives, flash memory, or any combination thereof), or both configured to store carrier waiting times 520. Carrier waiting times 520 includes, for example, data indicating respective waiting times for one or more proactive commands (e.g., display text, begin one or more operations, transit data to cellular network 108, begin BIP connection). Such waiting times, for example, represent the amount of time (e.g., in seconds) necessary for SIM device 104 to complete the preparation of (e.g., make ready) a proactive command after receiving one or more envelope commands (e.g., envelop commands 215, 405) from connection engine 116, modem 106, or both. That is to say, the amount of time necessary after an envelope command is sent to SIM device 104 before SIM device 104 will send a ready status (e.g., ready status 230, 250,415) indicating one or more proactive commands are ready. According to embodiments, in addition to being associated with a respective proactive command, each carrier waiting time 520 is further associated with a respective cellular carrier (e.g., cellular provider), for example, one or more cellular carriers associated with cellular network 108.

In embodiments, after user equipment 102 is attached to (e.g., authenticated on) cellular network 108, connection engine 116 sends one or more envelope commands each indicating one or more proactive commands to SIM device 104. In response to connection engine 116, modem 106, or both sending one or more envelope commands to SIM device 104, user equipment 102 is configured to request one or more carrier waiting times 520 from waiting time database 518. For example, user equipment 102 is configured to request a carrier waiting time 520 associated with a proactive command (e.g., send location data) indicated in the envelope command sent to SIM device 104. As another example, user equipment 102 is configured to request a carrier waiting time associated with a proactive command (e.g., start BIP connection) and a cellular carrier associated with cellular network 108 (e.g., the cellular network to which user equipment 102 is currently attached). After receiving the requested carrier waiting time 520 from waiting time database 518, user equipment 102 (e.g., connection engine 116) updates status timer 220 based on the received carrier waiting time 520. For example, user equipment 102 updates the amount of time of timer 220 to be equal to the amount of time indicated in the received carrier waiting time 520. In this way, user equipment 102 reduces the amount of time of status timer 220 to an amount of time necessary for SIM device 104 to make a proactive command ready, helping reduce the time needed to retrieve a proactive command from SIM device 104 and establish a connection between user equipment 102 and cellular network 108.

To further help reduce the time needed to retrieve a proactive command from SIM device 104 and establish a connection between user equipment 102 and cellular network 108, user equipment 102 is configured to update one or more carrier waiting times 520 stored in waiting time database 518. For example, in response to connection engine 116, modem 106, or both sending an envelope command to SIM device 104, connection engine 116, modem 106, or both are configured to start status timer 220 (e.g., having an amount of time updated by a carrier waiting time) and periodically send one or more status queries (e.g., status queries 225, 245, 410) to SIM device 104 while status timer 220 is running. Such status queries, for example, include data requesting SIM device 104 to report whether one or more proactive commands are ready to be sent to connection engine 116, modem 106, or both. As an example, while status timer 220 is running, connection engine 116, modem 106, or both are configured to send status queries at predetermined intervals of time (e.g., a predetermined number of seconds). If connection engine 116, modem 106, or both receive a ready status from SIM device 104 while status timer 220 is running, connection engine 116 stops status timer 220 and sends one or more results 522. Such results 522, for example, include data identifying the proactive command ready to be sent by SIM device 104 (e.g., the proactive command indicated in the ready status), the amount of time elapsed since connection engine 116, modem 106, or both sent the envelopment command to SIM device 104, (e.g., the amount of elapsed time indicated by status timer 220), an indication (e.g., a flag) of whether a ready status was received, a cellular carrier (e.g., cellular provider) associated with cellular network 108 (e.g., the cellular network to which user equipment 102 is currently attached), or any combination thereof. For example, in response to connection engine 116, modem 106, or both receiving a ready status from SIM device 104 after ten seconds have elapsed on status timer 220, connection engine 116, modem 106, or both send a result 522 to waiting time database 518 identifying the proactive command ready to be sent by SIM device 104, the amount of elapsed time indicated by status timer 220 (e.g., ten seconds), the cellular provider associated with the cellular network to which user equipment 102 is currently attached, and an indication (e.g., bit) indicating that a ready status was received. After receiving one or more results 522, waiting time database 518 then updates one or more carrier waiting times 520 based on the received results 522. For example, waiting time database 518 updates an amount of time indicated in a carrier waiting time associated with a first proactive command and a first carrier based on a result 522 also associated with the first proactive command and the first cellular carrier.

Additionally, if connection engine 116, modem 106, or both do not receive a ready status from SIM device 104 before status timer 220 expires, connection engine 116 sends one or more results 522 to waiting time database 518 including data identifying the proactive command ready to be sent by SIM device, the amount of time status timer 220 had (e.g., the amount of time that was counted by status timer 220, the amount of time elapsed since connection engine 116, modem 106, or both sent an envelope command to SIM device 104), an indication (e.g., a flag) that no ready status was received, a cellular carrier (e.g., cellular provider) associated with cellular network 108 (e.g., the cellular network to which user equipment 102 is currently attached), or any combination thereof. Additionally, in response to connection engine 116, modem 106, or both not receiving a ready status from SIM device 104 before status timer 220 expires, connection engine 116 is configured to start polling timer 524. Polling timer 524, for example, includes hardware-based circuitry, software-based circuitry, or both configured to count a predetermined amount of time (e.g., a predetermined polling time). While polling timer 524 is running, connection engine 116, modem 106, or both are configured to periodically send one or more status queries to SIM device 104. For example, connection engine 116, modem 106, or both are configured to send one or more status queries to SIM device 104 at predetermined intervals of time (e.g., configured to send a status query every second). In response to connection engine 116, modem 106, or both receiving a ready status while polling timer 524 is running, connection engine 116, modem 106, or both stop polling timer 524 and send one or more results 522 including data identifying the proactive command ready to be sent by SIM device 104, the amount of time elapsed since connection engine 116, modem 106, or both sent an envelope command to SIM device 104 (e.g., the amount of time status timer 220 had, the amount of elapsed time indicated by polling timer 524, or a combination of the two), an indication (e.g., a flag) that a ready status was received, a cellular carrier (e.g., cellular provider) associated with cellular network 108 (e.g., the cellular network to which user equipment 102 is currently attached), or any combination thereof. After receiving one or more of these results 522, waiting time database 518 then updates one or more carrier waiting times 520 based on the received results 522. For example, waiting time database 518 updates an amount of time indicated in a carrier waiting time associated with a first proactive command and a first carrier based on a result 522 also associated with the first proactive command and the first cellular carrier. In this way, the cellular networking framework 500 is configured to update the carrier waiting times 520 stored in waiting time database 518. As such, the cellular networking framework 500 helps update the amount of time of status timer 220 to more accurately represent the amount of time necessary for SIM device 104 to make a proactive command ready, helping reduce the time needed to retrieve a proactive command from SIM device 104.

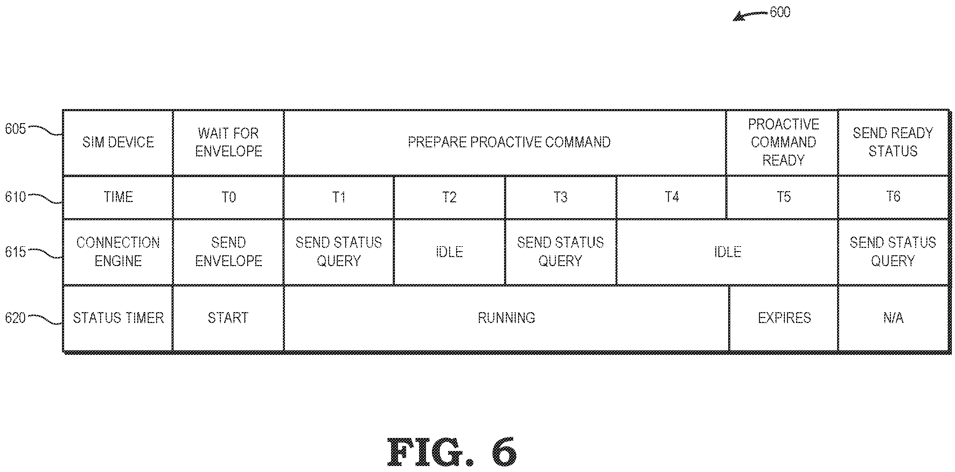

Referring now to FIG. 6, a timing diagram for an example process 600 for fast SIM device activation and early status queries is presented. The timing diagram includes a first row 605 that includes statues for SIM device 104 at a plurality of times, a second row 610 that includes the plurality of times, a third row 615 that includes statues for connection engine 116, and a fourth row 620 that includes statuses for status timer 220. At a first time, T0 (e.g., zero seconds), SIM device 104 waits for an envelope command indicating one or more proactive commands from connection engine 116, connection engine 116 sends the envelope command indicating one or more proactive commands to SIM device 104, and status timer 220 starts counting a predetermined amount of time (e.g., 30 seconds). At time T1, a predetermined time (e.g., in seconds) after T0, SIM device 104 prepares a proactive command indicated in the received envelope command, connection engine 116 sends a status query to SIM device 104, and status timer 220 continues to run. At time T2, a predetermined time (e.g., in seconds) after T1, SIM device 104 continues to prepare the command indicated in the received envelope command, connection engine 116 is idle, and status timer 220 continues to run. At time T3, a predetermined time (e.g., in seconds) after T2, SIM device 104 continues to prepare the command indicated in the received envelope command, connection engine 116 sends a second status query, and status timer 220 continues to run.

At time T4, a predetermined time (e.g., in seconds) after T3, SIM device 104 completes the preparation of the command indicated in the received envelope command, connection engine 116 is idle, and status timer 220 continues to run. At time T5, a predetermined time (e.g., in seconds) after T4, SIM device 104 is ready to send the proactive command to connection engine 116, modem 106, or both, connection engine 116 is idle, and status timer 220 expires. In embodiments, at T5, in response to status timer 220 expiring, connection engine 116, modem 106, or both sends one or more results 522 to waiting time database 518 that each include data identifying the proactive command ready to be sent by SIM device, the amount of time status timer 220 had (e.g., T5), an indication (e.g., a flag) that no ready status was received, a cellular carrier (e.g., cellular provider) associated with cellular network 108 (e.g., the cellular network to which user equipment 102 is currently attached), or any combination thereof. At time T6, connection engine 116 starts polling timer 524 and sends a third status query to SIM device 104. Further, at T6, SIM device 104 sends a ready status to connection engine 116, modem 106, or both. According to embodiments, in response to receiving the ready status from SIM device 104, connection engine 116, modem 106, or both are configured to stop polling timer 524 and send one or more results 522 including data identifying the proactive command ready to be sent by SIM device 104, the amount of time elapsed since connection engine 116, modem 106, or both sent an envelope command to SIM device 104 (e.g., the amount of time status timer 220 had, the amount of elapsed time indicated by polling timer 524, or a combination of the two), an indication (e.g., a flag) that a ready status was received, a cellular carrier (e.g., cellular provider) associated with cellular network 108 (e.g., the cellular network to which user equipment 102 is currently attached), or any combination thereof.

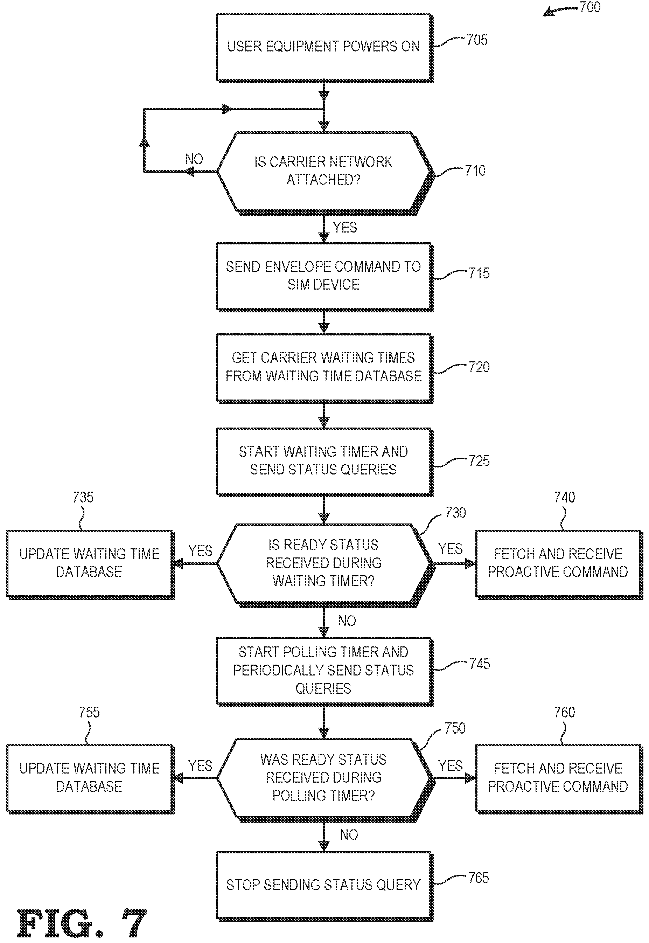

Referring now to FIG. 7, an example method 700 for fast SIM device activation and early status queries is presented. At step 705 of method 700, user equipment 102 powers on (e.g., is powered up). At step 710, connection engine 116 determines whether user equipment 102 is attached (e.g., authenticated) on cellular network 108 associated with one or more cellular carriers (e.g., cellular providers). In response to user equipment 102 not being attached to cellular network 108, the system repeats step 710, for example, until user equipment 102 is attached to cellular network 108. In response to user equipment being attached to cellular network 108, the system moves to step 715. At step 715, connection engine 116, modem 106, or both send one or more envelope commands indicating one or more proactive commands (e.g., display text, connect to one or more cells 110, begin one or more operations, transit data to cellular network 108, begin BIP connection) to SIM device 104. At step 720, connection engine 116, modem 106, or both request and receive one or more carrier waiting times 520 from waiting time database 518. Such carrier waiting times 520 include, for example, data indicating an amount of time associated with the proactive command indicated in the envelope command sent to SIM device 104, associated with the cellular carrier of cellular network 108, or both. After receiving a carrier waiting time 520, connection engine 116 updates status timer 220 based on the received carrier waiting time 520. For example, connection engine 116 updates the amount of time of status timer 220 to be equal to the amount of time indicated in the carrier waiting time 520.

At step 725, connection engine 116 starts status timer 220 and begins to periodically send status queries (e.g., data requesting the status of the proactive command) to SIM device 104. For example, connection engine 116 sends status queries at predetermined intervals of time (e.g., in seconds). At step 730, connection engine 116 determines whether it receives a ready status (e.g., data indicating a proactive command is ready) from SIM device 104 while status timer 220 is running. In response to receiving a ready status from SIM device 104 while status timer 220 is running, the system moves to step 735 and step 740 (e.g., concurrently). At step 735, connection engine 116 sends one or more results 522 to update the carrier waiting times 520 stored in waiting time database 518. Such results 522 include, for example, data identifying the proactive command ready to be sent by SIM device 104, the amount of elapsed time indicated by status timer 220, the cellular provider associated with cellular network 108, and an indication (e.g., bit) indicating that a ready status was received. Waiting time database 518 the updates one or more carrier waiting times 520 based on the received results 522 (e.g., updates an amount of time indicated in a carrier waiting time 520 to be equal to an amount of time indicated in a received result 522). At step 740, connection engine 116, modem 106, or both send one or more fetch commands (e.g., data requesting the ready proactive command) to SIM device 104 which then sends the ready proactive command to connection engine 116, modem 106, or both.

Referring again to step 730, in response to not receiving a ready status from SIM device 104 while status timer 220 is running (e.g., not receiving a ready status before status timer 220 expires), the system moves to step 745. At step 745, connection engine 116 starts polling timer 524 and begins to periodically send status queries to SIM device 104. For example, connection engine 116 sends status queries at predetermined intervals of time (e.g., every second). At step 750, connection engine 116 determines whether it receives a ready status (e.g., data indicating a proactive command is ready) from SIM device 104 while polling timer 524 is running. In response to receiving a ready status from SIM device 104 while polling timer 524 is running, the system moves to step 755 and step 760 (e.g., concurrently). At step 755, connection engine 116 sends one or more results 522 to update the carrier waiting times 520 stored in waiting time database 518. Such results 522 include, for example, data identifying the proactive command ready to be sent by SIM device 104, the amount of time elapsed since connection engine 116, modem 106, or both sent an envelope command to SIM device 104 (e.g., the amount of time status timer 220 has, the amount of elapsed time indicated by polling timer 524, or a combination of the two), the cellular provider associated with cellular network 108, and an indication (e.g., bit) indicating that a ready status was received. Waiting time database 518 then updates one or more carrier waiting times 520 based on the received results 522 (e.g., updates an amount of time indicated in a carrier waiting time 520 to be equal to an amount of time indicated in a received result 522). At step 760, connection engine 116, modem 106, or both send one or more fetch commands (e.g., data requesting the ready proactive command) to SIM device 104 which then sends the ready proactive command to connection engine 116, modem 106, or both. Referring again to step 750, in response to not receiving a ready status from SIM device 104 while polling timer 524 is running (e.g., not receiving a ready status before status timer 220 expires), the system moves to step 765. At step 745, connection engine 116 stops sending status queries to SIM device 104.

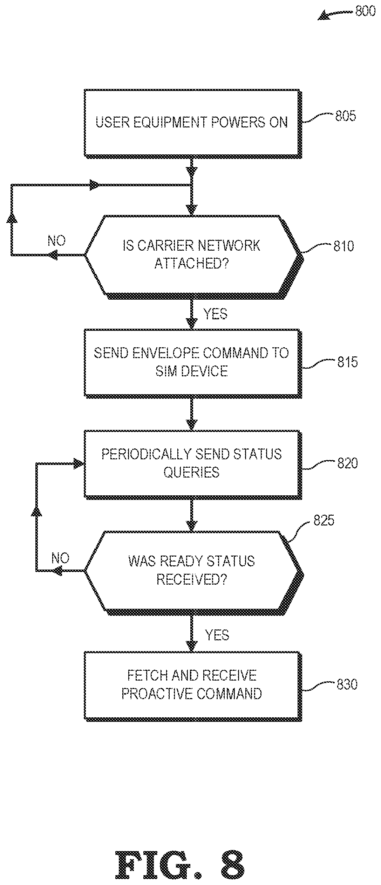

Referring now to FIG. 8, an example method 800 for fast SIM device activation and early status queries is presented. At step 805 of method 800, user equipment 102 powers on (e.g., is powered up). At step 810, connection engine 116 determines whether user equipment 102 is attached (e.g., authenticated) on cellular network 108 associated with one or more cellular carriers (e.g., cellular providers). In response to user equipment 102 not being attached to cellular network 108, the system repeats step 810, for example, until user equipment 102 is attached to cellular network 108. In response to user equipment being attached to cellular network 108, the system moves to step 815. At step 815, connection engine 116, modem 106, or both send one or more envelope commands indicating one or more proactive commands (e.g., display text, begin one or more operations, transit data to cellular network 108, begin BIP connection) to SIM device 104. At step 820, connection engine 116, modem 106, or both begin sending status queries (e.g., data requesting the status of the proactive command) to SIM device 104. For example, connection engine 116 sends status queries at predetermined intervals of time (e.g., in seconds). At step 825, connection engine 116 determines whether a ready status (e.g., data indicating a proactive command is ready) was received from SIM device 104. In response to a ready status being received, the system moves to step 830 where connection engine 116, modem 106, or both send one or more fetch commands (e.g., data requesting the ready proactive command) to SIM device 104 which then sends the ready proactive command to connection engine 116, modem 106, or both. In response to a ready status not being received, the system repeats step 820 where connection engine 116, modem 106, or both continue to periodically send status queries to SIM device 104.

In some embodiments, certain aspects of the techniques described above may be implemented by one or more processors of a processing system executing software. The software comprises one or more sets of executable instructions stored or otherwise tangibly embodied on a non-transitory computer-readable storage medium. The software can include the instructions and certain data that, when executed by the one or more processors, manipulate the one or more processors to perform one or more aspects of the techniques described above. The non-transitory computer-readable storage medium can include, for example, a magnetic or optical disk storage device, solid-state storage devices such as Flash memory, a cache, random access memory (RAM), or other non-volatile memory device or devices, and the like. The executable instructions stored on the non-transitory computer-readable storage medium may be in source code, assembly language code, object code, or another instruction format that is interpreted or otherwise executable by one or more processors.

A computer-readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer-readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still, further, the order in which activities are listed is not necessarily the order in which they are performed. Accordingly, the protection sought herein is as set forth in the claims below.

## Claims

1. A method comprising:
in response to a user equipment, UE (102), attaching to a cellular network:
sending an envelope command (215) indicating a proactive command to a subscriber identity module, SIM (104), device of the UE;
in response to a modem (106) of the UE sending the envelope command, starting a status timer at the modem; and
sending, by the modem, a status query (410) to the SIM device while the status timer is running; and
in response to receiving a status from the SIM device indicating the proactive command is ready, fetching the proactive command from the SIM device.

2. The method of claim 1, further comprising:
establishing a data connection between the UE and the cellular network based on the proactive command.

3. The method of either of claims 1 or 2, further comprising:
in response to sending the envelope command indicating the proactive command to the SIM device, retrieving a carrier waiting time associated with the proactive command from a database.

4. The method of claim 3, further comprising:
updating the status timer based on the carrier waiting time associated with the proactive command.

5. The method of claim 3, further comprising:
in response to receiving the status from the SIM device indicating the proactive command is ready, updating the carrier waiting time based on an amount of elapsed time indicated by the status timer.

6. The method of any of claims 1 to 5, further comprising:
in response to the status timer expiring, starting a polling timer and sending a second status query to the SIM device while the polling timer is running.

7. The method of claim 6, further comprising:
in response to receiving the status from the SIM device indicating the proactive command is ready, updating a carrier waiting time associated with the proactive command stored in a database based on an amount of elapsed time indicated by the polling timer.

8. The method of claim 7, further comprising:
periodically sending the status query to the SIM device while the status timer is running.

9. The method of any of claims 1 to 8, further comprising:
in response to the status timer expiring, starting a polling timer.

10. The method of claim 9, wherein the status query is periodically sent during the polling timer.

11. The method of any of claims 1 to 10, further comprising:
establishing a Bearer Independent Protocol connection between the UE and the cellular network based on the proactive command.

12. The method of any of claims 1 to 11, wherein the UE comprises a smartphone.

13. An apparatus comprising:
a user equipment, UE, including:
one or more processors; and
a memory coupled to the one or more processors and storing executable instructions configured to manipulate the one or more processors to perform the method of any of claims 1 to 12.

14. A user equipment, UE, comprising:
a subscriber identity module, SIM, device; and
a modem including a connection engine configured to perform the method of any of claims 1 to 12.

15. A computer program comprising instructions which, when executed by a processor, causes the processor to perform the method of any of claims 1 to 12.

## Patentansprüche

1. Verfahren, Folgendes umfassend:
als Reaktion auf eine Verbindung eines Benutzergeräts (cellular network - UE) (102) mit einem Mobilfunknetz:
Senden eines Envelope-Befehls (215), der einen proaktiven Befehl an eine Teilnehmeridentitätsmodul(subscriber identity module - SIM)-Vorrichtung (104) des UE angibt;
als Reaktion auf das Senden des Envelope-Befehls durch ein Modem (106) des UE Starten eines Status-Timers an dem Modem; und Senden einer Statusabfrage (410) durch das Modem an die SIM-Vorrichtung, während der Status-Timer läuft; und
als Reaktion auf den Empfang eines Status von der SIM-Vorrichtung, der angibt, dass der proaktive Befehl bereit ist, Abrufen des proaktiven Befehls von der SIM-Vorrichtung.

2. Verfahren nach Anspruch 1, ferner Folgendes umfassend:
Aufbauen einer Datenverbindung zwischen dem UE und dem Mobilfunknetz basierend auf dem proaktiven Befehl.

3. Verfahren nach Anspruch 1 oder 2, ferner Folgendes umfassend: als Reaktion auf das Senden des Envelope-Befehls, der den proaktiven Befehl an die SIM-Vorrichtung angibt, Abrufen einer dem proaktiven Befehl zugeordneten Wartezeit des Netzbetreibers aus einer Datenbank.

4. Verfahren nach Anspruch 3, ferner Folgendes umfassend: Aktualisieren des Status-Timers basierend auf der dem proaktiven Befehl zugeordneten Wartezeit des Netzbetreibers.

5. Verfahren nach Anspruch 3, ferner Folgendes umfassend:
als Reaktion auf den Empfang des Status von der SIM-Vorrichtung, der angibt, dass der proaktive Befehl bereit ist, Aktualisieren der Wartezeit des Netzbetreibers basierend auf einer durch den Status-Timer angegebenen Menge an verstrichener Zeit.

6. Verfahren nach einem der Ansprüche 1 bis 5, ferner Folgendes umfassend:
als Reaktion auf das Ablaufen des Status-Timers Starten eines Polling-Timers und Senden einer zweiten Statusabfrage an die SIM-Vorrichtung, während der Polling-Timer läuft.

7. Verfahren nach Anspruch 6, ferner Folgendes umfassend:
als Reaktion auf den Empfang des Status von der SIM-Vorrichtung, der angibt, dass der proaktive Befehl bereit ist, Aktualisieren einer dem proaktiven Befehl, der in einer Datenbank gespeichert ist, zugeordneten Wartezeit des Netzbetreibers basierend auf einer durch den Polling-Timer angegebenen Menge an verstrichener Zeit.

8. Verfahren nach Anspruch 7, ferner Folgendes umfassend:
periodisches Senden der Statusabfrage an die SIM-Vorrichtung, während der Status-Timer läuft.

9. Verfahren nach einem der Ansprüche 1 bis 8, ferner Folgendes umfassend:
als Reaktion auf das Ablaufen des Status-Timers Starten eines Polling-Timers.

10. Verfahren nach Anspruch 9, wobei die Statusabfrage periodisch während des Polling-Timers gesendet wird.

11. Verfahren nach einem der Ansprüche 1 bis 10, ferner Folgendes umfassend:
Aufbauen einer Trägerunabhängiges-Protokoll-Verbindung zwischen dem UE und dem Mobilfunknetz basierend auf dem proaktiven Befehl.

12. Verfahren nach einem der Ansprüche 1 bis 11, wobei das UE ein Smartphone umfasst.

13. Einrichtung, Folgendes umfassend:
ein Benutzergerät (UE), Folgendes beinhaltend:
einen oder mehrere Prozessoren; und
einen Speicher, der mit dem einen oder den mehreren Prozessoren gekoppelt ist und ausführbare Anweisungen speichert, die konfiguriert sind, um die einen oder mehreren Prozessoren zu manipulieren, um das Verfahren nach einem der Ansprüche 1 bis 12 durchzuführen.

14. Benutzergerät (UE), Folgendes umfassend:
eine Teilnehmeridentitätsmodul(SIM)-Vorrichtung; und
ein Modem, das eine Verbindungsmaschine beinhaltet, die konfiguriert ist, um das Verfahren nach einem der Ansprüche 1 bis 12 durchzuführen.

15. Computerprogramm, umfassend Anweisungen, die, wenn sie durch einen Prozessor ausgeführt werden, den Prozessor veranlassen, das Verfahren nach einem der Ansprüche 1 bis 12 durchzuführen.

## Revendications

1. Procédé comprenant :
en réponse au rattachement d'un équipement utilisateur, UE (102), à un réseau cellulaire :
l'envoi d'une commande d'enveloppe (215) indiquant une commande proactive à un dispositif de module d'identité d'abonné, SIM (104), de l'UE ;
en réponse à l'envoi de la commande d'enveloppe par le modem (106) de l'UE, le démarrage d'un minuteur d'état au niveau du modem ; et
l'envoi, par le modem, d'une demande d'état (410) au dispositif SIM pendant que le minuteur d'état est en cours d'exécution ; et
en réponse à la réception d'un état à partir du dispositif SIM indiquant que la commande proactive est prête, la récupération de la commande proactive à partir du dispositif SIM.

2. Procédé selon la revendication 1, comprenant en outre :
l'établissement d'une connexion de données entre l'UE et le réseau cellulaire sur la base de la commande proactive.

3. Procédé selon l'une quelconque des revendications 1 ou 2, comprenant en outre :
en réponse à l'envoi de la commande d'enveloppe indiquant la commande proactive au dispositif SIM, la récupération d'un temps d'attente de porteuse associé à la commande proactive à partir d'une base de données.

4. Procédé selon la revendication 3, comprenant en outre :
la mise à jour du minuteur d'état sur la base du temps d'attente de porteuse associé à la commande proactive.

5. Procédé selon la revendication 3, comprenant en outre : en réponse à la réception de l'état à partir du dispositif SIM indiquant que la commande proactive est prête, la mise à jour du temps d'attente de porteuse sur la base d'une durée de temps écoulé indiquée par le minuteur d'état.

6. Procédé selon l'une quelconque des revendications 1 à 5, comprenant en outre :
en réponse à l'expiration du minuteur d'état, le démarrage d'un minuteur d'interrogation et l'envoi d'une seconde demande d'état au dispositif SIM pendant que le minuteur d'interrogation est en cours d'exécution.

7. Procédé selon la revendication 6, comprenant en outre :
en réponse à la réception de l'état du dispositif SIM indiquant que la commande proactive est prête, la mise à jour d'un temps d'attente de porteuse associé à la commande proactive stocké dans une base de données sur la base d'une durée de temps écoulé indiquée par le minuteur d'interrogation.

8. Procédé selon la revendication 7, comprenant en outre :
l'envoi périodique de la demande d'état au dispositif SIM pendant que le minuteur d'état est en cours d'exécution.

9. Procédé selon l'une quelconque des revendications 1 à 8, comprenant en outre :
en réponse à l'expiration du minuteur d'état, le démarrage d'un minuteur d'interrogation.

10. Procédé selon la revendication 9, dans lequel la demande d'état est envoyée périodiquement pendant le minuteur d'interrogation.

11. Procédé selon l'une quelconque des revendications 1 à 10, comprenant en outre :
l'établissement d'une connexion de protocole indépendant du support entre l'UE et le réseau cellulaire sur la base de la commande proactive.

12. Procédé selon l'une quelconque des revendications 1 à 11, dans lequel l'UE comprend un smartphone.

13. Appareil comprenant :
un équipement utilisateur, UE, comportant :
un ou plusieurs processeurs ; et
une mémoire couplée aux un ou plusieurs processeurs et stockant des instructions exécutables configurées pour manipuler les un ou plusieurs processeurs pour réaliser le procédé selon l'une quelconque des revendications 1 à 12.

14. Équipement utilisateur, UE, comprenant :
un dispositif de module d'identification d'abonné, SIM ; et
un modem comportant un moteur de connexion configuré pour réaliser le procédé selon l'une quelconque des revendications 1 à 12.

15. Programme informatique comprenant des instructions qui, lorsqu'elles sont exécutées par un processeur, amènent le processeur à réaliser le procédé selon l'une quelconque des revendications 1 à 12.
